(19) Europäisches Patentamt / European Patent Office / Office européen des brevets

(11) **EP 4 145 904 A1**

(12) **EUROPEAN PATENT APPLICATION**
published in accordance with Art. 153(4) EPC

(43) Date of publication:
**08.03.2023 Bulletin 2023/10**

(21) Application number: **21797865.9**

(22) Date of filing: **15.04.2021**

(51) International Patent Classification (IPC):
***H04W 36/00*** (2009.01)

(86) International application number:
**PCT/CN2021/087360**

(87) International publication number:
**WO 2021/218643 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.04.2020 CN 202010340251**

(71) Applicant: **ZTE Corporation
Shenzhen, Guangdong 518057 (CN)**

(72) Inventors:
• **MA, Wei**
  **Shenzhen, Guangdong 518057 (CN)**
• **LIU, Hongjun**
  **Shenzhen, Guangdong 518057 (CN)**
• **LI, Dongmei**
  **Shenzhen, Guangdong 518057 (CN)**
• **WEN, Wu**
  **Shenzhen, Guangdong 518057 (CN)**
• **ZHANG, Boshan**
  **Shenzhen, Guangdong 518057 (CN)**

(74) Representative: **Tiburzi, Andrea et al
Barzanò & Zanardo Roma S.p.A.
Via Piemonte 26
00187 Roma (IT)**

(54) **NETWORK SWITCHING METHOD AND APPARATUS, DEVICE AND STORAGE MEDIUM**

(57) Provided are a network handover method and apparatus, a device, and a storage medium. The method is applied to a first communication node and includes that a first message is received, where the first message carries radio resource indication information; and part or all of radio resources of a source cell are reserved according to the radio resource indication information.

**FIG. 3**

**Description**

TECHNICAL FIELD

The present application relates to the technical field of communications, and for example, to a network handover method and apparatus, a device, and a storage medium.

BACKGROUND

A target 5th generation mobile communication technology (5G) base station after handover of a user equipment (UE) and a secondary node (SN) in an evolved universal terrestrial radio access and new radio-dual connectivity (EN-DC) network before the handover may be the same 5G base station, and the UE may continue to use original radio resources. An SN in the EN-DC network after handover of the UE and a 5G base station before the handover may be the same 5G base station, and the UE may continue to use original radio resources. How to enable the 5G base station before handover of the UE to know that the base station is the same before and after the handover and reserve the radio resources of the UE is a problem to be solved.

SUMMARY

The present application provides a network handover method and apparatus, a device, and a storage medium.

An embodiment of the present application provides a network handover method. The network handover method is applied to a first communication node and includes the following: a first message is received, where the first message carries radio resource indication information; and part of radio resources of a source cell or all of the radio resources of the source cell before a network handover are reserved according to the radio resource indication information.

An embodiment of the present application provides a network handover method. The network handover method is applied to a second communication node and includes the following: a first message is sent to a first communication node, where the first message carries radio resource indication information, and the radio resource indication information is used for indicating reserving part of radio resources of a source cell or all of the radio resources of the source cell after a network handover.

An embodiment of the present application provides a network handover apparatus. The network handover apparatus is configured at a first communication node and includes a receiving module and a reservation module. The receiving module is configured to receive a first message, where the first message carries radio resource indication information. The reservation module is configured to reserve part of radio resources of a source cell or all of the radio resources of the source cell before a network handover according to the radio resource indication information

An embodiment of the present application provides a network handover apparatus. The network handover apparatus is configured at a first communication node and includes a sending module. The sending module is configured to send a first message to a first communication node, where the first message carries radio resource indication information, and the radio resource indication information is used for indicating reserving part of radio resources of a source cell or all of the radio resources of the source cell after a network handover.

An embodiment of the present application provides a device. The device includes one or more processors and a memory. The memory is configured to store one or more programs. The one or more programs, when executed by the one or more processors, cause the one or more processors to implement any of the methods in the embodiments of the present application.

An embodiment of the present application provides a storage medium. The storage medium stores a computer program. The computer program, when executed by a processor, implements any of the methods in the embodiments of the present application.

With respect to the above embodiments and other aspects of the present application and implementations thereof, further description is provided in the brief description of drawings, detailed description and claims.

BRIEF DESCRIPTION OF DRAWINGS

FIG. 1 is a schematic diagram of a 5G network architecture;

FIG. 2 is a schematic diagram of an EN-DC architecture in the related art;

FIG. 3 is a flowchart of a network handover method according to an embodiment of the present application;

FIG. 3A is a flowchart of a network handover method according to an embodiment of the present application;

FIG. 4 is a flowchart of a method for switching between 4th generation mobile communication technology (4G) and 5G and switching between 5G stand alone (SA)/non-standalone (NSA) modes when a terminal initiates a voice call according to an embodiment of the present application;

FIG. 5 is a flowchart of a method for switching between 4G and 5G and switching between 5G SA/NSA modes when a terminal initiates a voice call according to an embodiment of the present application;

FIG. 6 is a flowchart of a method for switching between 4G and 5G and switching between 5G SA/NSA modes when a terminal initiates a voice call according to an embodiment of the present application;

FIG. 7 is a flowchart of a method for switching between 4G and 5G and switching between 5G SA/NSA modes when a terminal initiates a voice call according to an embodiment of the present application;

FIG. 8 is a flowchart of a method for switching between 4G and 5G and switching between 5G SA/NSA modes when a terminal initiates a voice call according to an embodiment of the present application;

FIG. 9 is a flowchart of a method for a terminal performing a network handover based on a measurement report of a current network according to an embodiment of the present application;

FIG. 10 is a flowchart of a method for a terminal performing a network handover based on a measurement report of a current network according to an embodiment of the present application;

FIG. 11 is a flowchart of a method for a terminal performing a network handover based on a measurement report of a current network according to an embodiment of the present application;

FIG. 12 is a flowchart of a method for a terminal performing a network handover based on a measurement report of a current network according to an embodiment of the present application;

FIG. 13 is a structural diagram of a network handover apparatus according to an embodiment of the present application;

FIG. 13A is a structural diagram of a network handover apparatus according to an embodiment of the present application; and

FIG. 14 is a structural diagram of a device according to an embodiment of the present application.

DETAILED DESCRIPTION

Embodiments of the present application will hereinafter be described with reference to the accompanying drawings.

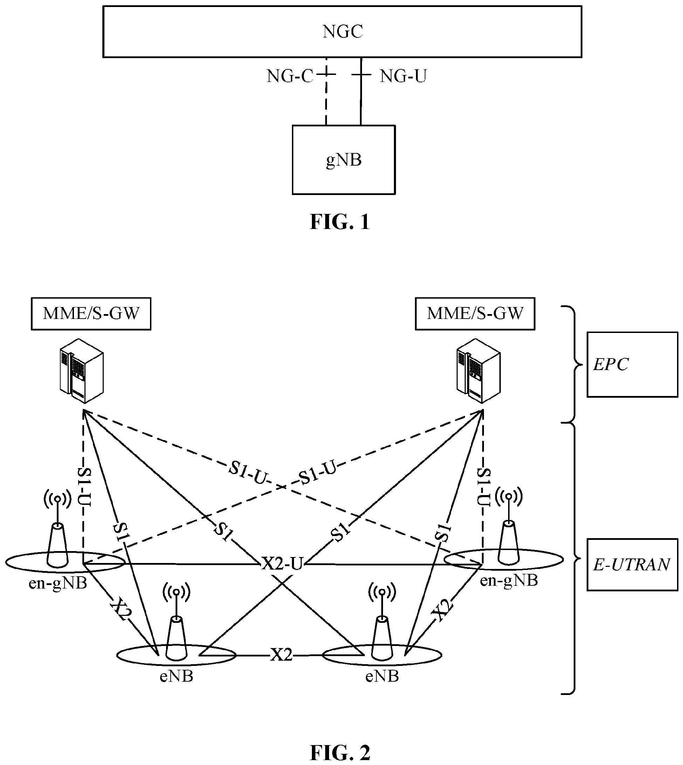

The processes shown in the flowcharts of the accompanying drawings may be executed in a computer system including a group of computer-executable instructions. Moreover, while a logical order is shown in the flowchart, in some cases, processes shown or described may be performed in a different order than herein.
A base station (a next generation radio access network (NG-RAN) node, or a next generation node B (gNB)) of a 5G network may support high-capacity services (such as, a mobile broad band (MBB)). FIG. 1 is a schematic diagram of a 5G network architecture. As shown in FIG. 1, the 5G network includes a 5G core network (5GC) and a 5G base station gNB. The 5GC includes network element nodes such as an access mobility function (AMF) node, a session management function (SMF) node, and a user plane function (UPF) node. The 5G base station is also referred to as the gNB or a next generation radio access network (NG-RAN) node. The 5G base station adopts a design of a new physical layer air interface, and the new physical layer air interface supports new radio (NR), an NR radio access technology (RAT) standard base station and a related base station network element interface. The 5G base station is connected to 5GC through a standardized next generation (NG) interface (including a next generation-control plane (NG-C) (signaling) connection and a next generation-user plane (NG-U) (user data) connection), and the NG-RAN base station (gNB or next generation-evolved NodeB (NG-eNB)) are connected through an Xn interface (including an Xn-Control plane (Xn-C) connection and an Xn-User plane (Xn-U) connection).
The 5G may provide an MBB service, but the 5G network may not support a voice service, that is, may not support a Voice over New Radio (VoNR) function under a 5G access. In this case, a mobile terminal, also referred to as a user equipment (UE), connected to the 5G network needs to be handed over to a 4G (long term evolution (LTE)) network to establish the voice service, and the 4G network generally supports a Voice over Long Term Evolution (VoLTE) function.
The 4G network includes a 4G core network, i.e., an evolved packet core (EPC) network and a 4G radio access network (a long term evolution radio access network (LTE RAN)). The EPC contains basic network element nodes such as a mobility management entity (MME) node, a serving gateway (SGW) node and a public data network (PDN) Gateway (PGW) node, and the 4G radio access network (RAN) includes an interface between an evolved Node B (eNB) and an associated base station network element.
In order to support the voice service and the MBB service of the mobile terminal at the same time, an EN-DC network architecture is provided. FIG. 2 is a schematic diagram of an EN-DC architecture in the related art. As shown in FIG. 2, one terminal is simultaneously connected to one eNB (4G base station, LTE base station) and serves as a master node (MN) and to one gNB (5G base station, NR base station) and serves as a secondary node (SN). This master node eNB is connected to the 4G core network EPC over an S1 interface and to the 5G base station over an X2 interface. This 5G base station gNB may also be connected to the EPC via an S1-User plane (S1-U) interface, and may also be connected to another 5G base station via an X2-User plane (X2-U) interface.

In the access network, a network mode in which two base stations (such as, a 4G base station and a 5G base station in an EN-DC architecture) jointly provide communication services to a UE in a tightly coupled manner is referred to as a dual connectivity (DC) network. As shown in FIG. 2, the two base stations are divided into a master node (MN, also referred to as a first network element) and a secondary node (SN, also referred to as a second network element). Through the design of the dual connectivity network, the communication capacity of one session can be improved.

In a scenario where the UE is handed over from the SA 5G network to the EN-DC network, the UE is originally connected to the SA 5G network, the UE is performing the MBB service, and at this time, the voice service (such as, answering a voice call or initiating a voice telephone call) is needed but the 5G network cannot support the voice service, so the UE needs to be handed over to the LTE network to establish a VoLTE service, the UE needs to continue the original MBB service, and thus the UE is handed over to the EN-DC network, establishes a VoLTE connection at an LTE RAN node, and establishes an original MBB service connection at the NG-RAN node.

In a scenario where the UE is handed over from the EN-DC network to the SA 5G network, the UE is originally connected to the EN-DC network, a source master node (S-MN) is an LTE eNB, a source secondary node (S-SN) is a gNB, also referred to as NG-RAN node, and when the UE ends the VoLTE service (such as, hanging up the telephone) and continues the 5G services (such as, a broadband streaming media service and an MBB service), the UE is handed over to the SA 5G network (Stand Alone NR).

For the first scenario described above, when a secondary node (SN) in the EN-DC network after the UE is handed over and an SA 5G base station before the UE is handed over are the same base station, a method is provided so that radio resources of the UE on the same 5G base station may continue to be used without being released. A similar method is also provided for the second scenario described above. A target 5G base station after the UE is handed over may know that the target 5G base station after the handover and a source 5G base station before the handover are the same 5G base station, and the UE may continue to use original radio resources.

However, there is no method provided to enable the 5G base station before the UE is handed over to know this and reserve the radio resources of the UE. The source base station before the UE is handed over releases the radio resources of the UE after knowing that the UE is successfully handed over, so that the target 5G base station after the handover cannot continue to use the radio resources of the UE.

An embodiment of the present application provides a network handover method and apparatus, a device and a storage medium, implementing that a target 5G base station after a UE is handed over can know that the target 5G base station after the handover and a source 5G base station before the handover are the same 5G base station, and the UE can continue to use original radio resources.

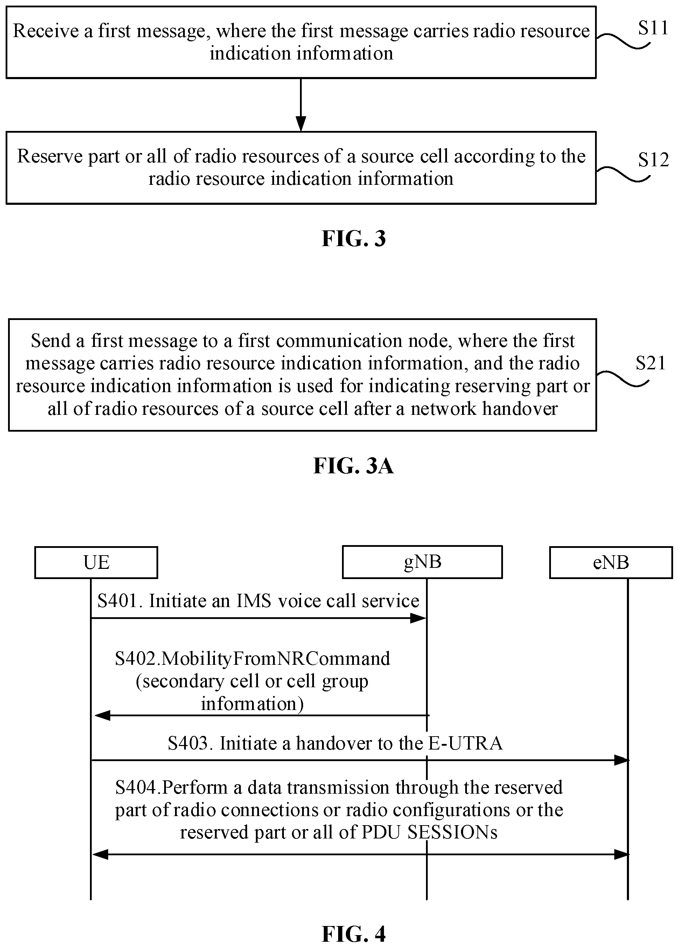

In an embodiment, an embodiment of the present application provides a network handover method, and FIG. 3 is a flowchart of a network handover method according to an embodiment of the present application. The method may be applicable to a case that a UE continues to use original radio resources before and after a network handover. The method may be performed by a network handover apparatus provided in the present application, the network handover apparatus may be implemented by software and/or hardware, and the method is applied to a first communication node.

As shown in FIG. 3, the network handover method provided in the embodiment of the present application includes S11 and S12.

In S11, a first message is received, where the first message carries radio resource indication information.

In S 12, part or all of radio resources of a source cell are reserved according to the radio resource indication information.

In an exemplary implementation, the first message is sent by a second communication node. In this embodiment, the first communication node may be understood as a user terminal in a network. In the embodiment of the present application, the user terminal is a device with a wireless transceiver function, and may be deployed on land including indoor or outdoor, handheld, wearable or vehicle-mounted; the user terminal may also be deployed on the water surface (such as a ship); and the user terminal may also be deployed in the air (such as, an airplane, a balloon, a satellite). The user terminal may be a mobile phone, a tablet computer (Pad), a computer with a wireless transceiver function, a virtual reality (VR) terminal, an augmented reality (AR) terminal, a wireless terminal in industrial control, a wireless terminal in unmanned driving (self-driving), a wireless terminal in remote medical, a wireless terminal in smart grid, a wireless terminal in transportation safety, a wireless terminal in smart city, a wireless terminal in smart home, or the like. The embodiments of the present application do not limit the application scenarios. The user terminal may also be sometimes referred to as a terminal, an access terminal, a UE unit, a UE station, a mobile station, a mobile platform, a remote station, a remote terminal, a mobile device, a UE terminal, a wireless communication device, a UE agent, a UE device, or the like, which is not limited in the embodiments of the present application.

The second communication node may be understood as a network node at a source side. In a case of a network handover from an SA 5G network to an EN-DC network, the second communication node may be understood as a 5G base station in the SA 5G network. In a case of a network handover from the EN-DC network to the SA 5G network, the second communication node may be understood as a master node in the EN-DC network.

In an exemplary implementation, the first message is a radio resource control (RRC) reconfiguration message, or the first message is a radio control message.

In an exemplary implementation, the radio resource indication information includes source cell reservation indication information, secondary cell information, reservation protocol data unit (PDU) session information, a non-access stratum (NAS) resource reservation indication, a suspend indication, or quality of service (QoS) flow reservation information.

In an exemplary implementation, the source cell reservation indication information is used for indicating reserving the part or all of the radio resources of the source cell after a network handover.

In an exemplary implementation, the part or all of the radio resources of the source cell are reserved after a network handover based on a relationship between the secondary cell information and source cell information.

In an exemplary implementation, the secondary cell information is information of a single secondary cell or a list of secondary cells.

In an exemplary implementation, the NAS resource reservation indication is used for indicating reserving part or all of NAS resources of the source cell after a network handover, where the part or all of the NAS resources include one or more of the following: a registration status of a UE, tracking area updating (TAU) information, or integrity and encryption information.

In an exemplary implementation, the suspend indication is used for indicating reserving the part or all of the radio resources of the source cell after a network handover.

In an exemplary implementation, the part or all of the radio resources include part or all of radio connections, where the radio connections include at least one of: an RRC connection, a signaling radio bearer (SRB), a data radio bearer (DRB), a PDU session context, or an NAS connection.

In an exemplary implementation, the part or all of the radio resources include part or all of radio configurations, where the radio configurations include at least one of: a layer 1 (L1) (physical layer) configuration, a media access control (MAC) layer configuration, a radio link control (RLC) layer configuration, an RRC layer configuration, a packet data convergence protocol (PDCP) layer configuration, or an NAS configuration.

In an exemplary implementation, the reservation PDU session information is used for indicating reserving a PDU session after a network handover.

In an exemplary implementation, the reservation PDU session information includes PDU session reservation indication information or an information list of to-be-reserved PDU sessions; where the information list of the PDU sessions includes information of one or more PDU sessions.

In an exemplary implementation, the QoS flow reservation information is used for indicating reserving a QoS flow or QoS flow information after a network handover.

In an exemplary implementation, that the part or all of radio resources are reserved includes the following: a downlink bandwidth part (BWP) continues to be used; and downlink data sent by a physical downlink shared channel (PDSCH) is received according to resource indication value (RIV) indication information in downlink control information (DCI).

In an exemplary implementation, if

$$(L_{CRBs} - 1) \le \lfloor N_{RB}^{DL}/2 \rfloor$$

is satisfied, then

$$RIV = N_{RB}^{DL}(L_{CRBs} - 1) + RB_{start};$$ and if

$$(L_{CRBs} - 1) \le \lfloor N_{RB}^{DL}/2 \rfloor$$

is not satisfied, then

$$RIV = N_{RB}^{DL}(N_{RB}^{DL} -$$

$$L_{CRBs}+1) + (N_{RB}^{DL} - 1 - RB_{start})$$, where $L_{CRBs}$ is a length of consecutive resource blocks (RBs), $N_{RB}^{DL}$ is a number of RBs of a downlink bandwidth, and $RB_{start}$ is a starting resource block in the downlink bandwidth.

In an exemplary implementation, that the part or all of the radio resources are reserved includes the following: a cell-radio network temporary identifier (C-RNTI) of a UE is reserved, where the C-RNTI of the UE is used for receiving DCI.

In an exemplary implementation, that the part or all of the radio resources are reserved includes the following: a resource allocation manner of an uplink control channel such as a physical uplink control channel (PUCCH) is reserved; and/or an allocated PUCCH resource set is reserved.

In an exemplary implementation, that the part or all of the radio resources are reserved includes the following: one or more data radio bearers (DRBs) are reserved; one or more signaling radio bearers (SRBs) are reserved; and one of an SRB1 or an SRB2 is modified to an SRB3.

In an exemplary implementation, that the part or all of the radio resources are reserved includes the following: an original PDU session continues to be used for a data transmission; or after a PDU session is initiated by the first communication node, a data connection is reestablished and recovered.

In an exemplary implementation, that reserving the part or all of the radio resources are reserved includes the following: a security context is used before a network handover.

In an exemplary implementation, that the part or all of the radio resources are reserved includes the following: a dedicated control channel (DCCH) is reserved.

In an exemplary implementation, that the DCCH is reserved includes the following: data continues to be sent and received according to the DCCH.

In an exemplary implementation, that the part or all of the radio resources are reserved includes the following: part of QOS flows or QOS flow information are reserved, or all of QOS flows or QOS flow information are reserved.

In an exemplary implementation, that the QOS flows or the QOS flow information are reserved includes: the QOS flow and/or the QOS flow information continues to be used for performing data sending and/or receiving of a user plane.

In an exemplary implementation, an embodiment of the present application provides a network handover method, and FIG. 3A is a flowchart of a network handover method according to an embodiment of the present application. The method may be applicable to a case that a UE continues to use original radio resources before and after a network handover. The method may be performed by a network handover apparatus provided in the present application, the network handover apparatus may be implemented by software and/or hardware, and the method is applied to a second communication node.

As shown in FIG. 3A, the network handover method provided in the embodiment of the present application mainly includes S21.

In S21, a first message is sent to a first communication node, where the first message carries radio resource indication information, and the radio resource indication information is used for indicating reserving part or all of radio resources of a source cell after a network handover.

In an exemplary implementation, the second communication node is a network node at a source side.

In an exemplary implementation, the first message is an RRC reconfiguration message, or the first message is a radio control message.

In an exemplary implementation, the radio resource indication information includes source cell reservation indication information, secondary cell information, reservation PDU session information, an NAS resource reservation indication, a suspend indication, or QoS flow reservation information.

In an exemplary implementation, the source cell reservation indication information is used for indicating reserving the part or all of the radio resources of the source cell after a network handover.

In an exemplary implementation, the part or all of the radio resources of the source cell are reserved after a network handover based on a relationship between the secondary cell information and source cell information.

In an exemplary implementation, the secondary cell information is information of a single secondary cell or a list of secondary cells.

In an exemplary implementation, the NAS resource reservation indication is used for indicating reserving part or all of NAS resources of the source cell after a network handover, where the part or all of the NAS resources include one or more of the following: a registration status of a UE, TAU information, or integrity and encryption information.

In an exemplary implementation, the suspend indication is used for indicating reserving the part or all of the radio resources of the source cell after a network handover.

In an exemplary implementation, the part or all of the radio resources include part or all of radio connections, where the radio connections include at least one of an RRC connection, an SRB, a DRB, a PDU session context, or an NAS connection.

In an exemplary implementation, the part or all of the radio resources include part or all of radio configurations, where the radio configurations include at least one of: a L1 (physical layer) configuration, an MAC layer configuration, an RLC layer configuration, an RRC layer configuration, a PDCP layer configuration, or an NAS configuration.

In an exemplary implementation, the reservation PDU session information is used for indicating reserving a PDU session after a network handover.

In an exemplary implementation, the reservation PDU session information includes PDU session reservation indication information or an information list of to-be-reserved PDU sessions; where the information list of the PDU sessions includes information of one or more PDU sessions.

In an exemplary implementation, the QoS flow reservation information is used for indicating reserving a QoS flow or QoS flow information after a network handover.

In an application implementation, FIG. 4 is a flowchart of a method for switching between 4G and 5G and switching between 5G SA/NSA modes when a terminal initiates a voice call according to an embodiment of the present application.

This embodiment describes operations between a terminal and the target RAN node and operations between the terminal and an RAN node of a source network in the above-described embodiments. This embodiment involves three network nodes, where a network node 1 is a UE, a network node 2 is a network node NR gNB in which the UE currently camps, and a network node 3 is an evolved-universal terrestrial radio access (E-UTRA) eNB of a target network RAN network node to which the UE is handed over.

In S401, the UE in an RRC connected state actively initiates an Internet protocol Multimedia Subsystem (IMS) voice call service to an RAN node gNB of a source network to which the UE belongs.

In S402, after a core network (CN) finds that a current 5G System (5GS) does not support an IMS voice service, the gNB sends a MobilityFromNRCommand message that is from the NR to notify the UE to hand over to an EN-DC network, where the MobilityFromNRCommand message includes secondary cell or cell group information (NR).

In S403, the terminal initiates a handover to the E-UTRA according to the MobilityFromNRCommand. If the terminal finds that the secondary cell or cell group information is consistent with cell or cell group information of a source network node gNB, after the handover to a cell network node eNB of the E-UTRA is completed, part or all of radio connections with the source network node gNB are reserved, or part or all of radio configurations with the source network node gNB are reserved, or part or all of PDU sessions with the source network node gNB are reserved.

In S404, the EN-DC network performs a data transmission through the reserved part of radio connections or radio configurations, or the reserved part or all of PDU SESSIONs.

After the UE receives the MobilityFromNRCommand message carrying 0 to multiple secondary cells or cell group information, if one cell or cell group information among the 0 to multiple secondary cells or cell group information is consistent with cell information or cell group information of the source cell, or the same network node gNB is used, then the UE does not initiate a radio configuration or radio connection establishment request with the network node gNB of the secondary cell or cell group.

After the UE receives the MobilityFromNRCommand message, if one cell or cell group information among the 0 to multiple secondary cells or cell group information is consistent with cell information or cell group information of the source cell, or the same network node gNB is used, then the UE reserves part or all of radio configurations with the S-MN network node gNB of the source cell or reserves part or all of radio connections with the S-MN network node gNB of the source cell.

After the UE receives the MobilityFromNRCommand message carrying master cell or cell group information, if one cell or cell group information is consistent with cell information or cell group information of the source cell, or the same network node gNB is used, then the UE reserves part or all of radio resources with the S-MN network node gNB of the source cell.

The part or all of connections include an RRC connection, part or all of SRBs, and part or all of DRBs.

Part or all of radio resources include a physical layer resource, an MAC resource, an SRB, a DRB, a PDCP entity, and a service data adaptation protocol (SDAP) entity.

The radio configuration includes part or all of L1 (physical layer) configurations, part or all of MAC layer configurations, part or all of RLC layer configurations, part or all of RRC layer configurations, part or all of PDCP layer configurations, and part or all of NAS configurations.

The S401 in which the voice call service is initiated includes the following processes.

The terminal sends an invite message to an IMS server via the gNB, the IMS server sends a 100trying message to the UE via the gNB, the UE sends a 183Session Progress to the IMS server via the gNB, the IMS server sends a Provisional ACKnowledge (PRACK) message to the UE, and the UE sends a 200OK message to the IMS server.

The reserved part or all of physical layer configurations includes that: the UE continues to use a downlink BWP and receives downlink data sent by a PDSCH according to RIV indication information in DCI.

RIV values are as follows: if $(L_{CRBs} - 1) \le \lfloor N_{RB}^{DL}/2 \rfloor$ is satisfied, then $RIV = N_{RB}^{DL}(L_{CRBs} - 1) + RB_{start}$; and if $(L_{CRBs} - 1) \le \lfloor N_{RB}^{DL}/2 \rfloor$ is not satisfied, then $RIV = N_{RB}^{DL}(N_{RB}^{DL} - L_{CRBs} + 1) + (N_{RB}^{DL} - 1 - RB_{start})$, where $L_{CRBs}$ is a length of consecutive RBs, $N_{RB}^{DL}$ is a number of RBs of a downlink bandwidth, and $RB_{start}$ is a starting resource block in the downlink bandwidth.

That the part or all of physical layer configurations are reserved includes the following: a C-RNTI of a UE is reserved, where the C-RNTI of the UE is used for receiving DCI information.

That the part or all of physical layer configurations are reserved includes the following: a resource allocation manner of a physical uplink control channel (PUCCH) is reserved; and/or an allocated PUCCH resource set is reserved.

That the part or all of radio connections are reserved includes the following: one or more data radio bearers (DRBs) are reserved.

That the part or all of radio connections are reserved includes the following: one or more signaling radio bearers (SRBs) are reserved.

That the part or all of radio connections are reserved includes the following: one of an SRB1 or an SRB2 is modified to an SRB3.

That the part or all of NAS configurations are reserved includes the following: a registration status of a UE is reserved, and/or TAU information is reserved, and/or integrity and encryption information are reserved.

After the UE completes a handover, the UE continues to use the original PDU SESSION for performing a data transmission, or initiates the reestablishment of a PDN connection at the E-sgNB and recover the data connection.

After the UE completes a handover, the UE continues to use the original PDU SESSION for performing a data transmission, or initiates the reestablishment of a PDU SEESSION at the E-sgNB and recover the data connection.

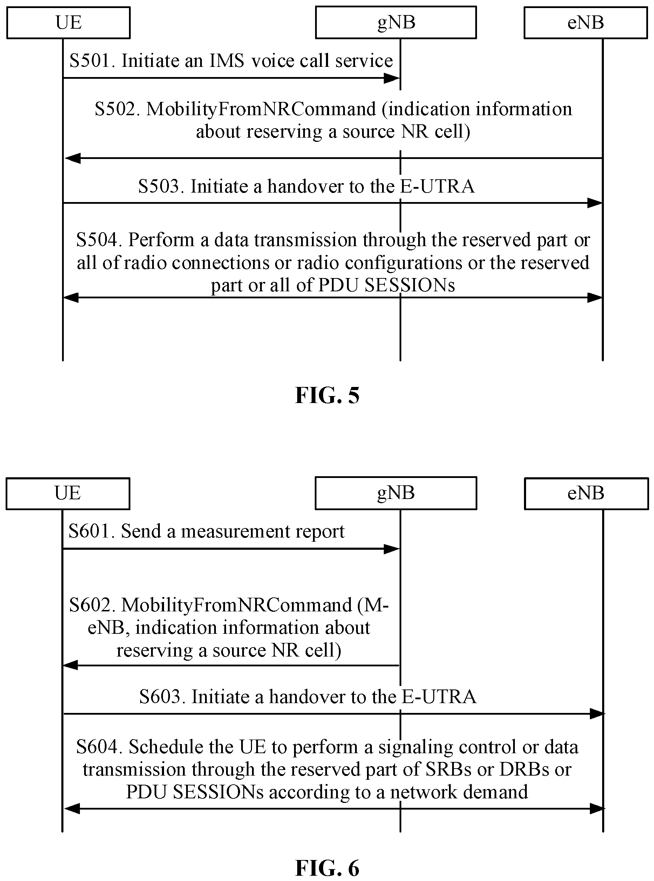

In an application implementation, FIG. 5 is a flowchart of a method for switching between 4G and 5G and switching between 5G SA/NSA modes when a terminal initiates a voice call according to an embodiment of the present application. This embodiment involves three network nodes, a network node 1 is a UE, a network node 2 is an NR g-NB of a network in which the UE currently camps, and a network node 3 is an E-UTRA e-NB of a target network to which the UE is handed over.

In S501, the UE in an RRC connected state actively initiates an IMS voice call service to the gNB to which the UE belongs.

In S502, after a CN finds that a current 5GS does not support an IMS voice service, the eNB sends a MobilityFromNRCommand message to notify the UE to hand over to an EN-DC network, where the MobilityFromNRCommand message includes indication information about reserving a source NR cell.

In S503, the terminal initiates a handover to the E-UTRA according to the MobilityFromNRCommand, and after a cell handover to the E-UTRA is completed, part or all of radio connections of the source NR cell or radio configurations of the source NR cell are reserved, or part or all of PDU SESSIONs are reserved.

The part or all of connections include an RRC connection and a related SRB and DRB.

The part or all of radio resources include a L1 (physical layer) resource, an MAC resource, an SRB, a DRB, a PDCP entity and an SDAP entity.

The radio configurations include part or all of L1 (physical layer) configurations, part or all of MAC layer configurations, part or all of RLC layer configurations, part or all of RRC layer configurations, part or all of PDCP layer configurations, and part or all of NAS configurations.

In S504, the EN-DC network performs a data transmission through the reserved part or all of radio connections or radio configurations or PDU SESSIONs.

In an application implementation, FIG. 6 is a flowchart of a method for a terminal switching between 4G and 5G and between 5G SA/NSA modes according to an embodiment of the present application. This embodiment involves three network nodes, a network node 1 is a UE; a network node 2 is a network NR g-NB in which the UE currently camps, and a network node 3 is an E-UTRA e-NB of a target network to which the UE is handed over.

In S601, the UE in an RRC connected state sends a measurement report to the gNB.

In S602, the gNB sends a MobilityFromNRCommand message to notify the UE to hand over to an EN-DC network, where the MobilityFromNRCommand message includes target master node (T-MN) information (master eNB (M-eNB)) of E-UTRA and indication information about reserving a source NR cell.

In S603, the terminal initiates a handover to the E-UTRA according to the MobilityFromNRCommand, and after a cell handover to the E-UTRA is completed, part or all of radio bearers of the source NR cell are reserved.

That the part or all of the radio bearers of the source cell are reserved includes the following: part or all of original physical layer resource configurations are reserved, part or all of SDAP entities or PDCP entities in SRB1, SRB2 and DRB are reserved, and all or part of PDU SESSIONs in an NR network are reserved; and for all or part of PDU SESSIONs, a connection reestablishment of a corresponding PDN CONNECTION is initiated in the EN-DC network.

In S604, the eNB schedules the UE to perform a signaling control or data transmission through the reserved part of SRBs or DRBs or PDU SESSIONs according to a network demand.

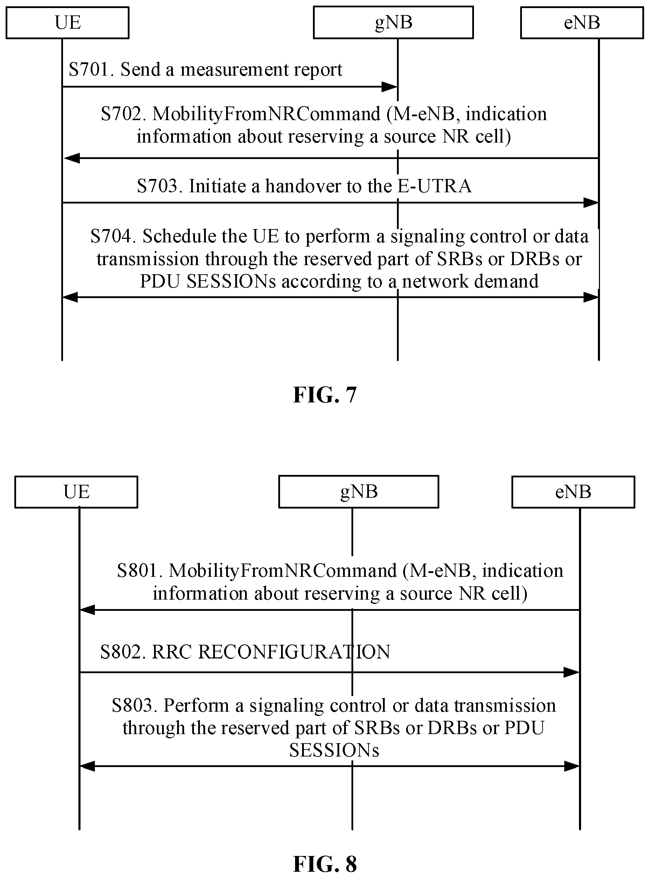

In an application implementation, FIG. 7 is a flowchart of a method for a terminal switching between 4G and 5G and between 5G SA/NSA modes according to an embodiment of the present application. This embodiment involves three network nodes, a network node 1 is a UE, a network node 2 is a network NR gNB in which the UE currently camps, and a network node 3 is an E-UTRA eNB of a target network to which the UE is handed over.

In S701, the UE in an RRC connected state sends a measurement report to the gNB.

In S702, the eNB sends a MobilityFromNRCommand message to notify the UE to hand over to an EN-DC network, where the MobilityFromNRCommand message includes T-MN information (M-eNB) of E-UTRA and target secondary node (T-SN) information (gNB).

In S703, the terminal initiates a handover to the E-UTRA according to the MobilityFromNRCommand, and after a cell handover to the E-UTRA is completed, if the T-SN is a source NR cell (i.e., the T-SN is a node of the source NR cell), then part or all of radio bearers of the source NR cell are reserved. That the part or all of the radio bearers of the source cell are reserved includes the following: part or all of original physical layer resource configurations are reserved, or part or all of SDAP entities or PDCP entities in SRB 1, SRB2 and DRB are reserved; all or part of PDU SESSIONs in an NR network are reserved; and for all or part of PDU SESSIONs, and a reestablishment of a corresponding PDN CONNECTION is initiated in the EN-DC network.

In S704, the eNB schedules the UE to perform a signaling control or data transmission through the reserved part of SRBs or DRBs or PDU SESSIONs according to a network demand.

In an application implementation, FIG. 8 is a flowchart of a method for switching between 4G and 5G and switching between 5G SA/NSA modes when a terminal is called by a voice call according to an embodiment of the present application. This embodiment involves three network nodes, a network node 1 is a UE, a network node 2 is an NR gNB of a network in which the UE currently camps, and the network node 3 is an E-UTRA eNB of a target network to which the UE is handed over.

In S801, a CN tries to initiate an IMS called voice call service for the UE in a connected state, and after the CN finds that a 5GS does not support an IMS Voice service, the eNB sends a MobilityFromNRCommand message to notify the UE in the connected state to hand voer to an EN-DC network, where the MobilityFromNRCommand message includes T-MN information (M-eNB) of E-UTRA and T-SN information.

In S802, the terminal initiates a handover to the E-UTRA according to the MobilityFromNRCommand and sends an RRC reconfiguration (RRCRECONFIGURATION) message to the eNB.

If the terminal finds that the T-SN information is a current NR cell, after a cell handover to the E-UTRA is completed, part or all of radio resources of the source NR cell are reserved. That the part or all of the radio resources of the source cell are reserved includes one of the following: part or all of original physical layer (layer 1, L1) resource configurations are reserved, and part or all of SDAP entities or PDCP entities in SRB1, SRB2 and DRB are reserved; all or part of PDU SESSIONs in an NR network are reserved; and for all or part of PDU SESSIONs, a connection reestablishment of a corresponding PDN CONNECTION is not initiated in the EN-DC network.

In S803, the EN-DC network performs a signaling control or data transmission through the reserved part of SRBs or DRBs or PDU SESSIONs.

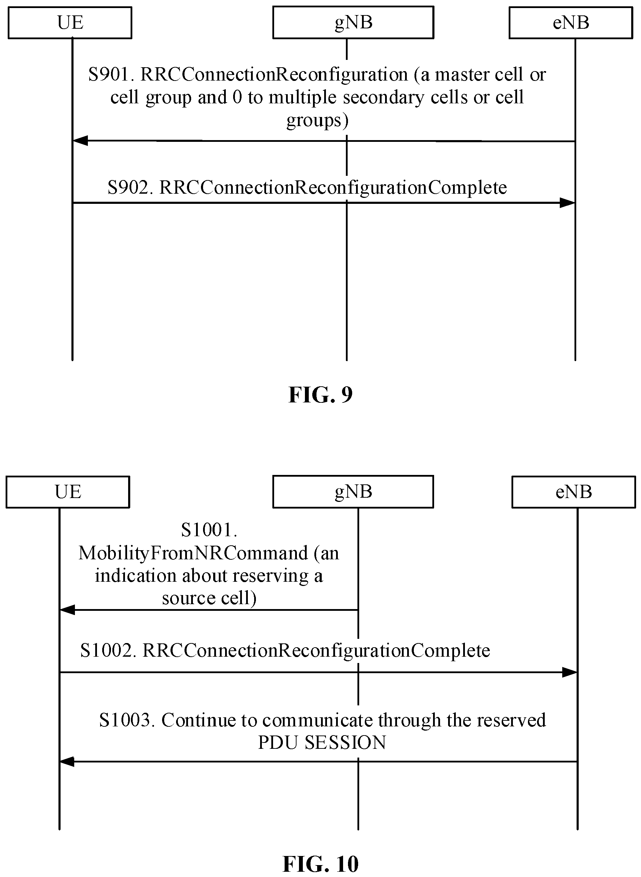

In an application implementation, FIG. 9 is a flowchart of a method for a terminal performing a network handover based on a measurement report of a current network according to an embodiment of the present application. A UE in a connected state is connected to an EN-DC 5G network, a terminal and an NR node gNB are performing an enhanced mobile broadband (EMMB) service, and a network side finds that the UE needs to perform an MN cell handover according to the measurement report of the current network. In order to ensure the continuity of an EMMB service, in particular the continuity of PDU SESSION data, the handover flow is as follows.

In S901, an eNB sends an RRCConnectionReconfiguration message to notify the UE to hand over to another EN-DC network, where the RRCConnectionReconfiguration message includes a master cell or cell group and 0 to multiple secondary cells or cell groups.

In S902, the UE receives the RRCConnectionReconfiguration, initiates a handover to a target EN-DC cell indicated in the RRCConnectionReconfiguration, and sends an RRCConnectionReconfigurationComplete message to the eNB of a target cell to complete handover from the NR cell to the EN-DC cell. The UE determines whether to reserve all or part of current PDU SESSIONs between the UE and the source cell (S-MN, gNB) according to a secondary cell or a cell group in the RRCConnectionReconfiguration. If the master cell or cell group and the 0 to multiple secondary cells or cell groups are consistent with the source cell or cell group, then all or part of the current PDU SESSIONs between the UE and the source cell (S-MN, gNB) of part or all of the UE and the source cell are reserved.

The UE after the handover reserves the PDU SESSION of the S-MN of the source cell, and the UE does not initiate a request for establishing a new PDU SESSION based on an identifier (ID) and/or an Internet Protocol (IP) address and/or access point name (APN) information of the PDU SESSION to establish the new PDU SESSION.

The UE receives and/or sends data through the reserved part or all of PDU SESSIONs.

In an application implementation, FIG. 10 is a flowchart of a method for a terminal performing a network handover based on a measurement report of a current network according to an embodiment of the present application. A UE is originally connected to an SA 5G network, and the UE is performing an MBB service, and at this time, a voice service (such as, answering a voice call or initiating a voice call) needs to be performed, but the 5G network cannot support the voice service, then the UE needs to be handed over to an LTE network to establish a VoLTE service (based on a Voice of the LTE), and the UE needs to continue the original MBB service. Therefore, the UE is handed over to an EN-DC network, a VoLTE connection is established at an LTE RAN node, and an original MBB service connection is established at an NG-RAN node.

A 5G base station (S-gNB), in an original SA 5G network, to which the UE is connected is also referred to as a source node (S-node). In a target EN-DC network to which the UE is handed over, a target master node (T-MN) is an LTE eNB, also referred to as a Master eNB (M-eNB), and a target secondary node (T-SN) is a 5G base station, that is, an NG-RAN node. When a target NG-RAN node is an original NR node, and the handover flow is as follows.

In S1001, the gNB sends a MobilityFromNRCommand message to notify the UE to hand over to an EN-DC network, where the MobilityFromNRCommand message includes an indication about reserving a source cell (i.e., a source NR cell).

In S1002, the UE receives that the MobilityFromNRCommand, initiates a handover to a target EN-DC cell, sends an RRCConnectionReconfigurationComplete message to an e-NB of the target cell to complete a handover from an NR cell to an EN-DC cell. The UE determines whether to reserve all or part of the current PDU SESSIONs between the UE and the source cell or cell group (S-MN, gNB) according to the indication about reserving the source cell in the MobilityFromNRCommand. If the indication information indicates reserving the source cell, then all or part of the current PDU SESSIONs between the UE and the source cell (S-MN, gNB) of part or all of the UE and the secondary node S-SN of the source cell are reserved.

In S1003, the EN-DC network continues to communicate through the reserved PDU SESSION.

After the UE receives the MobilityFromNRCommand message carrying indication information of the T-MN and the indication information about reserving source cell, if the indication information indicates reserving the source cell, then a re-establishment is not initiated for the PDU SESSION of the reserved source cell.

The UE after the handover reserves the PDU SESSION of the S-MN of the source cell, and the UE does not initiate a request for establishing a new PDU SESSION based on an ID and/or an IP address and/or APN information of the PDU SESSION to establish the new PDU SESSION.

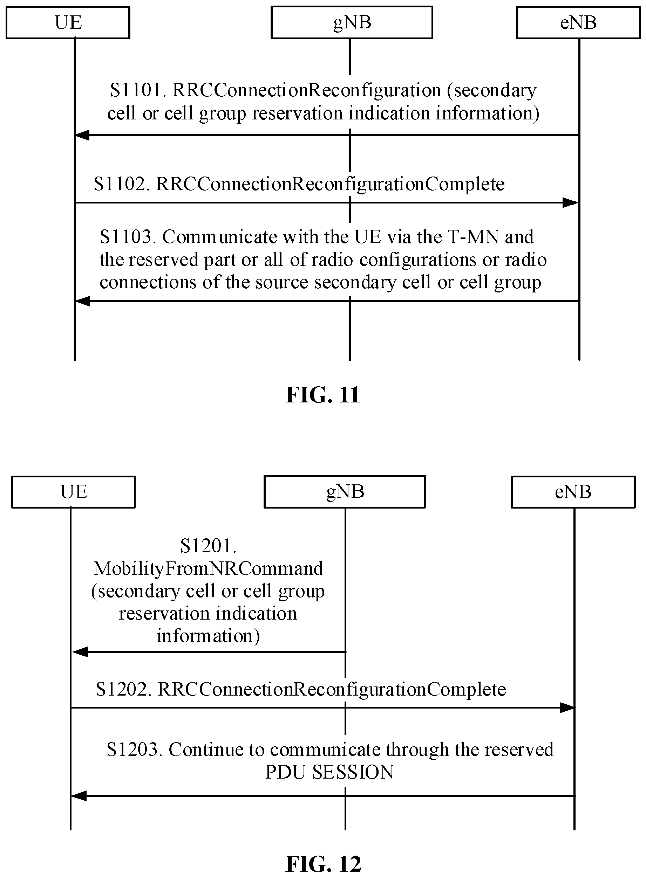

In an application implementation, FIG. 11 is a flowchart of a method for a terminal performing a network handover based on a measurement report of a current network according to an embodiment of the present application. A UE in a connected state is connected to an EN-DC 5G network, and the terminal and the NR node gNB are performing an EMMB service. According to the measurement report of the current network, a network side finds that the UE needs to perform a handover of an MN cell. In order to ensure the continuity of an EMMB service, the network wants to maintain the current radio configuration or radio connection of an SN cell

The handover flow is as follows.

In S1101, the eNB sends an RRCConnection-Reconfiguration message to notify the UE to hand over to another EN-DC network, where the RRCConnection-Reconfiguration message includes secondary cell or cell group reservation indication information.

In S 1102, the UE receives the RRCConnectionReconfiguration, initiates a handover to the target EN-DC cell, and sends the RRCConnectionReconfigurationComplete message to the eNBs of the target cell to complete the handover from an NR cell to an EN-DC cell. The UE determines whether to reserve the current radio configuration or radio connection between the UE and the source secondary cell or cell group according to secondary cell or cell group reservation indication information in the RRCConnectionReconfiguration. If the indication information indicates reserving the secondary cell, then part or all of radio configurations or radio connections between the UE and the source secondary cell or cell group are reserved.

In S1103, the EN-DC network communicates with the UE via the T-MN and the reserved part or all of radio configurations or radio connections of the source secondary cell or cell group.

After the UE receives the RRCConnection-Reconfiguration message carrying the secondary cell reservation indication information of the T-MN, if the indication information indicates reserving the secondary cell, then the UE does not initiate an update or reestablishment of a radio configuration or radio connection consistent with the information of the source secondary cell or cell group or use a radio configuration or radio connection of a secondary cell or cell group of the same network node.

After the UE receives the RRCConnection-Reconfiguration message carrying the secondary cell reservation indication information of the T-MN, if the indication information indicates reserving the secondary cell, then the UE reserves part or all of radio resources with the source secondary cell or cell group.

The part or all of radio resources include an L1 (physical layer) resource, an MAC resource, an SRB, a DRB, a PDCP entity, and an SDAP entity.

The radio configurations include part or all of L1 (physical layer) configurations, part or all of MAC layer configurations, part or all of RLC layer configurations, part or all of RRC layer configurations, part or all of PDCP layer configurations, and part or all of NAS configurations.

In an application implementation, FIG. 12 is a flowchart of a method for a terminal performing a network handover based on a measurement report of a current network according to an embodiment of the present application. A UE is originally connected to an SA 5G network, and the UE is performing an MBB service, and at this time, a voice service (such as, answering a voice call or initiating a voice call) needs to be performed, but the 5G network cannot support the voice service, the UE needs to be handed over to an LTE network to establish a VoLTE service (a Voice based on the LTE), and the UE needs to continue the original MBB service. Therefore, the UE is handed over to the EN-DC network, a VoLTE connection is established at an LTE RAN node, and an original MBB service connection is established at an NG-RAN node.

In an NR network, the UE needs to establish a PDU SESSION with the network to perform data communication, in order to maintain the data continuity during a network handover, generally, the UE releases the current PDU SESSION after the network handover and correspondingly establishes a new PDU SESSION or Session Description Protocol CONNECTION (SDP CONNECTION) in a target cell; and at this time, the data transmission may be terminated momentarily due to the reestablishment of the PDU session or the SDP CONNECTION. In order to ensure higher data continuity, when the T-SN of the target cell is consistent with the S-MNRAN node or cell of the current cell, the flow is as follows:

In S1201, the gNB sends a MobilityFromNRCommand message to notify the UE to hand over to the EN-DC network, where the MobilityFromNRCommand message includes an PDU SESSION reservation indication.

In S 1202, the UE receives the MobilityFromNRCommand, initiates a handover to a target EN-DC cell, and sends an RRCConnectionReconfigurationComplete message to an eNB of the target cell. The UE determines whether to reserve all or part of the current PDU SESSIONs between the UE and a node (S-MN, gNB) of the source cell or cell group according to the PDU reservation indication information in the MobilityFromNRCommand. If the indication information indicates reserving the source cell, then all or part of the current PDU SESSIONs between the UE and the source cell (S-MN, gNB) of the source cell or cell group of part or all of the UE and the secondary node S-SN of the source cell are reserved.

In S1203, the EN-DC network continues to communicate through the reserved PDU SESSION.

After the UE receives the MobilityFromNRCommand message carrying indication information of the T-MN and the indication information about reserving PDU SESSION, if the indication information indicates reserving PDU, then no reestablishment is initiated for the reserved PDU SESSION of the source cell.

The PDU SESSION reservation indication information may be an indication for reserving PDU SESSION or a list of information of PDU SESSION to be reserved.

The UE after the handover reserves the PDU SESSION of the S-MN of the source cell, and the UE does not initiate a request for establishing a new PDU SESSION based on an ID and/or an IP address and/or APN information of the PDU SESSION to establish the new PDU SESSION.

In an application embodiment, this embodiment provides a UE supporting handovers among different networks, where the UE performs the following operations.

The UE receives a MobiltyFromNRCommand message of the NR, where the MobiltyFromNRCommand message includes source cell reservation indication information, or cell or cell group information.

The UE determines whether to reserve all or part of PDU SESSIONs in the source network according to the source cell reservation indication information or a relationship between the the cell or cell group information and the source cell or cell group.

The UE continues to communicate through the reserved PDU SESSION.

The UE after the handover reserves a PDU SESSION with the S-MN of the source cell, the UE does not initiate a request for establishing a new PDU SESSION based on an ID and/or an IP address and/or APN information of the PDU SESSION to establish the new PDU SESSION.

In an application implementation, this embodiment provides a UE supporting handovers among different networks, where the UE performs the following operations.

The UE receives a MobilityFromNRCommand message of the NR, where the mobility FromNRCommand message contains reservation PDU SESSION information.

The UE determines whether to reserve all or part of PDU SESSIONs in the source network according to the reservation PDU SESSION information.

The UE continues to communicate through the reserved PDU SESSION.

The UE after the handover reserves a PDU SESSION with the S-MN of the source cell, the UE does not initiate a request for establishing a new PDU SESSION based on an ID and/or an IP address and/or APN information of the PDU SESSION to establish the new PDU SESSION.

The reservation PDU SESSION information may be an indication for reserving a PDU session; or an information list of PDU SESSIONs to be reserved; and the information list of the PDU SESSIONs includes information of at least one PDU SESSION.

In an application implementation, this embodiment provides a network node (source node) supporting a handover between different networks. A MobilityFromNRCommand or RRCCONNECTION RECONFIGURATION message is sent, where the MobilityFromNRCommand or RRCCONNECTION RECONFIGURATION message includes source cell reservation indication information, cell or cell group information, or PDU SESSION reservation information, or DRB reservation information.

The cell reservation indication information is used for instruct the terminal to reserve all or part of radio connections or radio configurations of the source cell after the handover.

The cell or cell information may be used for instructing the terminal to reserve all or part of radio connections or radio configurations of the source cell after the handover.

The cell reservation indication information may be used for instructing the terminal to reserve all or part of radio connections or radio configurations of the source cell after the handover.

The DRB reservation information is used for instructing the terminal to reserve part or all of DRBs after a cell handover.

The cell or cell information may be used for instructing the terminal to reserve all or part of radio resource configurations of the source cell, all or part of radio connections of the source cell, or all or part of PDU SEESSIONs of the source cell after the handover.

The PDU SESSION reservation information is used for instructing the terminal to reserve all or part of radio resource configurations of the source cell, all or part of radio connections of the source cell, or all or part of PDU SEESSIONs of the source cell.

In an application implementation, a network node (a target network core network element) supporting a handover between different networks is provided. After an RRCCONNECTION RECONFIGURATION message sent by a terminal that reserves part or all of radio connections or radio resources of a source cell is received, and the network performs data communication through the reserved part or all of radio connections or radio configurations.

In an application implementation, a network node (target network core network element) supporting a handover between different networks is provided. After an RRCCONNECTION RECONFIGURATION message sent by a terminal that reverses the PDU SESSION is received, the network performs data communication through the reserved part or all of PDU SESSIONs.

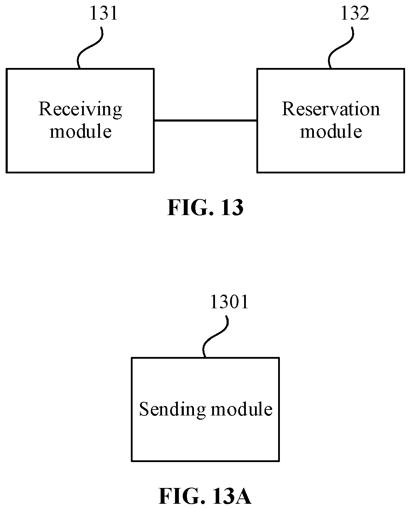

In an embodiment, an embodiment of the present application provides a network handover apparatus, and FIG. 13 is a structural diagram of a network handover apparatus according to an embodiment of the present application. The apparatus may be applicable to a case that a UE continues to use original radio resources before and after a network handover. The network handover apparatus may be implemented by software and/or hardware, and the method is applied in a first communication node.

As shown in FIG. 13, the network handover apparatus provided in the embodiment of the present application includes a receiving module 131 and a reservation module 132.

The receiving module 131 is configured to receive a first message, where the first message carries radio resource indication information.

The reservation module 132 is configured to reserve part or all of radio resources of a source cell according to the radio resource indication information.

In an exemplary implementation, the first message is sent by the first communication node.

In an exemplary implementation, the first message is an RRC reconfiguration message, or the first message is a radio control message.

In an exemplary implementation, the radio resource indication information includes source cell reservation indication information, secondary cell information, reservation PDU session information, an NAS resource reservation indication, a suspend indication, or QoS flow reservation information.

In an exemplary implementation, the source cell reservation indication information is used for indicating reserving the part or all of the radio resources of the source cell after a network handover.

In an exemplary implementation, the part or all of the radio resources of the source cell are reserving after a network handover based on a relationship between the secondary cell information and source cell information.

In an exemplary implementation, the secondary cell information is information of a single secondary cell or a list of secondary cells.

In an exemplary implementation, the NAS resource reservation indication is used for indicating reserving part or all of NAS resources of the source cell after a network handover, where the part or all of the NAS resources include one or more of the following: a registration status of a UE, TAU information, or integrity and encryption information.

In an exemplary implementation, the suspend indication is used for indicating reserving the part or all of the radio resources of the source cell after a network handover.

In an exemplary implementation, the part or all of the radio resources include part or all of radio connections, where the radio connections include at least one of an RRC connection, an SRB, a DRB, a PDU session context, an NAS connection.

In an exemplary implementation, the part or all of the radio resources include part or all of radio configurations, where the radio configurations include at least one o: a L1 (physical layer) configuration, an MAC layer configuration, an RLC layer configuration, an RRC layer configuration, a PDCP layer configuration, or an NAS configuration.

In an exemplary implementation, the reservation PDU session information is used for indicating reserving a PDU session after a network handover.

In an exemplary implementation, the reservation PDU session information includes PDU session reservation indication information or an information list of to-be-reserved PDU sessions, where the information list of the PDU sessions includes information of one or more PDU sessions.

In an exemplary implementation, the QoS flow reservation information is used for indicating reserving a QoS flow or QoS flow information after a network handover.

In an exemplary implementation, the reservation module 132 is configured to: continue to use a downlink bandwidth part (BWP); and receive downlink data sent by a PDSCH according to RIV indication information in downlink control information (DCI).

In an exemplary implementation, if

$$(L_{CRBs} - 1) \le \lfloor N_{RB}^{DL}/2 \rfloor$$

is satisfied, then

$$RIV = N_{RB}^{DL}(L_{CRBs} - 1) + RB_{start};$$ and if

$$(L_{CRBs} - 1) \le \lfloor N_{RB}^{DL}/2 \rfloor$$

is not satisfied, then

$$RIV = N_{RB}^{DL}(N_{RB}^{DL} -$$

$$L_{CRBs}+1) + (N_{RB}^{DL} - 1 - RB_{start})$$ where $L_{CRBs}$ is a length of consecutive RBs, $N_{RB}^{DL}$ is a number of RBs of a downlink bandwidth, and $RB_{start}$ is a starting resource block in the downlink bandwidth.

In an exemplary implementation, the reservation module 132 is configured to reserve a C-RNTI of a UE, where the C-RNTI of the UE is used for receiving DCI.

In an exemplary implementation, the reservation module 132 is configured to reserve a resource allocation manner of a physical uplink control channel (PUCCH) and/or reserve an allocated PUCCH resource set.

In an exemplary implementation, the reservation module 132 is configured to reserve one or more data radio bearers (DRBs), reserve one or more signaling radio bearers (SRBs), and modify one of an SRB1 or an SRB2 to an SRB3.

In an exemplary implementation, the reservation module 132 is configured to continue to use an original PDU session for a data transmission, or reestablish and recover a data connection after the PDU session is initiated by the first communication node.

In an exemplary implementation, the reservation module 132 is configured to use a security context before a network handover.

In an exemplary implementation, the reservation module 132 is configured to reserve a DCCH.

In an exemplary implementation, the reservation module 132 is configured to continue to send and receive data according to the DCCH.

In an exemplary implementation, the reservation module 132 is configured to reserve part of QOS flows or QOS flow information, or reserve all of QOS flows or QOS flow information.

In an exemplary implementation, that the QOS flows or QOS flow information is reserved includes the following: the QOS flows and/or the QOS flow information continues to be used for performing data sending and/or receiving of a user plane.

The network handover apparatus provided in this embodiment may perform the network handover method provided in any of the embodiments of the present application, and has a corresponding function module for performing the method. Technical details not described in this embodiment may refer to the network handover method provided in any of the embodiments of the present application.

In the above-described embodiments of the network handover apparatus, each unit and module included in the network handover apparatus are only divided according to functional logic, but are not limited to the above-described divisions, as long as corresponding functions can be implemented, and the names of the function units are also only to facilitate distinguishing from each other and are not intended to limit the scope of protection of the present application.

In an exemplary implementation, an embodiment of the present application provides a network handover apparatus. FIG. 13A is a structural diagram of a network handover apparatus according to an embodiment of the present application. The apparatus may be applicable to a case that a UE continues to use original radio resources before and after a network handover. The network handover apparatus may be implemented by software and/or hardware, and the apparatus is configured in a second communication node.

As shown in FIG. 13A, the network handover apparatus provided in the embodiment of the present application includes a sending module 1301.

The sending module 1301 is configured to send a first message to a first communication node, where the first message carries radio resource indication information, and the radio resource indication information is used for indicating reserving part or all of radio resources of a source cell after a network handover.

In an exemplary implementation, the second communication node is a network node at a source side.

In an exemplary implementation, the first message is an RRC reconfiguration message, or the first message is a radio control message.

In an exemplary implementation, the radio resource indication information includes source cell reservation indication information, secondary cell information, reservation PDU session information, an NAS resource reservation indication, a suspend indication, or QoS flow reservation information.

In an exemplary implementation, the source cell reservation indication information is used for indicating reserving the part or all of the radio resources of the source cell after a network handover.

In an exemplary implementation, the part or all of the radio resources of the source cell are reserved after a network handover based on a relationship between the secondary cell information and source cell information.

In an exemplary implementation, the secondary cell information is information of a single secondary cell or a list of secondary cells.

In an exemplary implementation, the NAS resource reservation indication is used for indicating reserving part or all of NAS resources of the source cell after a network handover, where the part or all of NAS resources include one or more of the following: a registration status of a UE, TAU information, or integrity and encryption information.

In an exemplary implementation, the suspend indication is used for indicating reserving the part or all of the radio resources of the source cell after a network handover.

In an exemplary implementation, the part or all of the radio resources include part or all of radio connections, where the radio connections include at least one of an RRC connection, an SRB, a DRB, a PDU session context, or an NAS connection.

In an exemplary implementation, the part or all of the radio resources include part or all of radio configurations, where the radio configuration includes at least one of a L1 (physical layer) configuration, an MAC layer configuration, an RLC layer configuration, an RRC layer configuration, a PDCP layer configuration, or an NAS configuration.

In an exemplary implementation, the reservation PDU session information is used for indicating reserving a PDU session after a network handover.

In an exemplary implementation, the reservation PDU session information includes PDU session reservation indication information or an information list of to-be-reserved PDU sessions, where the information list of the PDU sessions includes information of one or more PDU sessions.

In an exemplary implementation, the QoS flow reservation information is used for indicating reserving a QoS flow or QoS flow information after a network handover.

The network handover apparatus provided in this embodiment may perform the network handover method provided in any of the embodiments of the present application, and has a corresponding function module for performing the method. Technical details not described in this embodiment may refer to the network handover method provided in any of the embodiments of the present application.

In the above-described embodiments of the network handover apparatus, each unit and module included in the network handover apparatus are only divided according to functional logic, but are not limited to the above-described divisions, as long as corresponding functions may be realized, and the names of the function units are also only to facilitate distinguishing from each other and are not intended to limit the scope of protection of the present application.

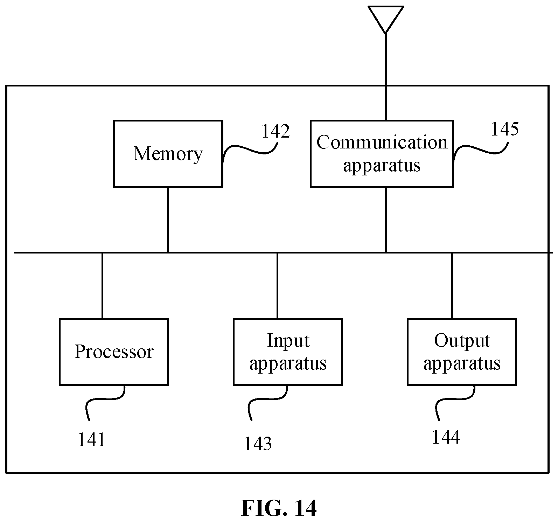

An embodiment of the present application further provides a device. FIG. 14 is a structural diagram of a device according to an embodiment of the present application. As shown in FIG. 14, the device includes a processor 141, a memory 142, an input apparatus 143, an output apparatus 144 and a communication apparatus 145. One or more processors 141 may be provided in the device, and one processor 141 is used as an example in FIG. 14. The processor 141, the memory 142, the input apparatus 143 and the output apparatus 144 in the device may be connected by a bus or in other manners. In FIG. 14, the connection through the bus is used as an example.

The memory 142 as a computer-readable storage medium may be used for storing a software program, a computer-executable program and a module. For example, a program instruction/module (such as, the receiving module 131 and the reservation module 132 in the network handover apparatus) corresponding to the network handover method in the embodiments of the present application, or a program instruction/module (such as, the sending module 1301 in the network handover apparatus) corresponding to the network handover method in the embodiments of the present application. The processor 141 executes various function applications and data processing of the device, i.e., implements any one of the methods provided in the embodiments of the present application, by executing software programs, instructions, and modules stored in the memory 142.

The memory 142 may include a program storage region and a data storage region. The program storage region may store an operating system, and an application program required for at least one function; and the data storage region may store data or the like created according to the use of the device. The memory 142 may include a high-speed random access memory and may also include a non-volatile memory, such as at least one magnetic disk storage device, flash memory device, or other non-volatile solid-state memory devices. In some examples, the memory 142 may include a memory remotely disposed with respect to the processor 141, and these remote memories may be connected to the device over a network. Examples of the preceding network include, but are not limited to, the Internet, an intranet, a local area network, a mobile communication network, and a combination thereof.

The input apparatus 143 may be configured to receive inputted digital or character information and generate key signal input related to user settings and function control of the device. The output apparatus 144 may include display devices such as a display screen.

The communication apparatus 145 may include a receiver and a transmitter. The communication apparatus 145 is configured to perform an information transceiving communication under the control of the processor 141.

An embodiment of the present application further provides a storage medium including a computer-executable instruction. The computer-executable instruction is configured to perform, when executed by a computer processor, the network handover method, where the method is applied to a first communication node, and the method includes the following: a first message is received, where the first message carries radio resource indication information; and part or all of radio resources of a source cell are reserved according to the radio resource indication information.

According to the storage medium including the computer-executable instruction provided in the embodiments of the present application, the computer-executable instruction is configured to implement operations not limited to the network handover method described above, but also configured to implement relevant operations in the network handover method provided in any of the embodiments of the present application.

An embodiment of the present application further provides a storage medium including a computer-executable instruction. The computer-executable instruction is configured to implement, when executed by a computer processor, the network handover method, the method is applied to a second communication node, and the method includes the following: a first message is sent to a first communication node, where the first message carries radio resource indication information, and the radio resource indication information is used for indicating reserving part or all of radio resources of a source cell after a network handover.

According to the storage medium including the computer-executable instruction provided in the embodiments of the present application, the computer-executable instruction is configured to perform operations not limited to the network handover method described above, but also configured to implement relevant operations in the network handover method provided in any of the embodiments of the present application.

Those skilled in the art can understand from the above description of the implementations that the present application may be implemented by means of software and general-purpose hardware, and may also be implemented by hardware. Based on this understanding, the technical scheme of the present application may be embodied in the form of a software product, and the computer software product may be stored in a computer readable storage medium, such as a floppy disk of a computer, a read-only memory (ROM), a random access memory (RAM), a flash memory (FLASH), a hard disk or an optional disk, including multiple instructions to enable a computer device (which may be a personal computer, a server, or a network device, etc.) to perform the method of the embodiments of the present application.

The above description is only exemplary embodiments of the present application, and is not intended to limit the scope of the present application.

Those skilled in the art should understand that the term user terminal covers any applicable type of wireless user equipment such as a mobile phone, a portable data processing apparatus, a portable web browser or a vehicle-mounted mobile station.

In general, various embodiments of the present application may be implemented in hardware or special purpose circuits, software, logic or any combination thereof. For example, some aspects may be implemented in hardware, while other aspects may be implemented in firmware or software which may be executed by a controller, a microprocessor or other computing devices, although the present application is not limited thereto.

The embodiments of the present application may be implemented through the execution of computer program instructions by a data processor of a mobile apparatus, for example, implemented in a processor entity, by hardware, or by a combination of software and hardware.

The computer program instructions may be assembly instructions, instruction set architecture (ISA) instructions, machine instructions, machine-related instructions, microcodes, firmware instructions, status setting data or source or object codes written in any combination of one or more programming languages.

A block diagram of any logic flow among the drawings of the present application may represent program steps, may represent interconnected logic circuits, modules and functions, or may represent a combination of program steps with logic circuits, modules, and functions. Computer programs may be stored in a memory. The memory may be of any type suitable for the local technical environment and may be implemented using any suitable data storage technology, such as, but not limited to, a read-only memory (ROM), a random-access memory (RAM), an optical memory device and system (a digital video disc (DVD) or a compact disc (CD)), and the like. Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A network handover method, applied to a first communication node, comprising:

   receiving a first message, wherein the first message carries radio resource indication information; and
   reserving part of radio resources of a source cell or all of the radio resources of the source cell according to the radio resource indication information.

2. The method of claim 1, wherein the first message is a radio resource control (RRC) reconfiguration message, or the first message is a radio control message.

3. The method of claim 1, wherein the radio resource indication information comprises one of the following: source cell reservation indication information, secondary cell information, reservation protocol data unit (PDU) session information, a non-access stratum (NAS) resource reservation indication, a suspend indication, or quality of service (QoS) flow reservation information.

4. The method of claim 3, wherein the source cell reservation indication information is used for indicating reserving the part of the radio resources of the source cell or all of the radio resources of the source cell after a network handover.

5. The method of claim 3, wherein the secondary cell information is used for indicating reserving, based on a relationship between the secondary cell information and source cell information, the part of the radio resources of the source cell or all of the radio resources of the source cell after a network handover.

6. The method of claim 5, wherein the secondary cell information is information of a single secondary cell or a list of secondary cells.

7. The method of claim 3, wherein the NAS resource reservation indication is used for indicating reserving part of NAS resources of the source cell or all of the NAS resources of the source cell after a network handover, wherein the part of the NAS resources of the source cell or all of the NAS resources comprise at least one of a registration status of a user equipment (UE), tracking area updating (TAU) information, or integrity and encryption information.

8. The method of claim 3, wherein the suspend indication is used for indicating reserving the part of the radio resources of the source cell or all of the radio resources of the source cell after a network handover.

9. The method of claim 1, wherein the part of the radio resources or all of the radio resources comprise part of radio connections or all of the radio connections, wherein the radio connections comprise at least one of an RRC connection, a signaling radio bearer (SRB), a data radio bearer (DRB), a PDU session context, or an NAS connection.

10. The method of claim 1, wherein the part of the radio resources or all of the radio resources comprise part of radio configurations or all of the radio configurations, wherein the radio configurations comprise at least one of: a physical layer L1 configuration, a media access control (MAC) layer configuration, a radio link control (RLC) layer configuration, an RRC layer configuration, a packet data convergence protocol (PDCP) layer configuration, or an NAS configuration.

11. The method of claim 3, wherein the reservation PDU session information is used for indicating reserving a PDU session after a network handover.

12. The method of claim 11, wherein the reservation PDU session information comprises one of the following: PDU session reservation indication information, or an information list of to-be-reserved PDU sessions, wherein the information list of to-be-reserved PDU sessions comprises information of at least one PDU session.

13. The method of claim 3, wherein the QoS flow reservation information is used for indicating reserving a QoS flow or QoS flow information after a network handover.

14. The method of claim 1, wherein reserving the part of the radio resources or all of the radio resources comprises:

    continuing to use a downlink bandwidth part (BWP); and
    receiving downlink data sent by a physical downlink shared channel (PDSCH) according to resource indication value (RIV) indication information in downlink control information (DCI).

15. The method of claim 14, wherein,

in a case where $(L_{CRBs} - 1) \le \lfloor N_{RB}^{DL}/2 \rfloor$ is satisfied,

$$RIV = N_{RB}^{DL}(L_{CRBs} - 1) + RB_{start} \text{; and}$$

in a case where $(L_{CRBs} - 1) \le \lfloor N_{RB}^{DL}/2 \rfloor$ is not satisfied, $RIV = N_{RB}^{DL}(N_{RB}^{DL} - L_{CRBs}+1) + (N_{RB}^{DL} - 1 - RB_{start})$ ;

wherein $L_{CRBs}$ is a length of consecutive resource blocks (RBs), $N_{RB}^{DL}$ is a number of RBs of a downlink bandwidth, and $RB_{start}$ is a starting resource block in the downlink bandwidth.

16. The method of claim 1, wherein reserving the part of the radio resources or all of the radio resources comprises:
reserving a cell-radio network temporary identifier (C-RNTI) of a UE, wherein the C-RNTI of the UE is used for receiving DCI.

17. The method of claim 1, wherein reserving the part of the radio resources or all of the radio resources comprises at least one of the following:

    reserving a resource allocation manner of a physical uplink control channel (PUCCH); or
    reserving an allocated PUCCH resource set.

18. The method of claim 1, wherein reserving the part of the radio resources or all of the radio resources comprises:

    reserving at least one DRB;
    reserving at least one SRB; and
    modifying one of an SRB 1 or an SRB2 to an SRB3.

19. The method of claim 1, wherein reserving the part of the radio resources or all of the radio resources comprises:

    continuing to use an original PDU session for a data transmission; or
    after a PDU session is initiated by the first communication node, reestablishing and recovering a data connection.

20. The method of claim 1, wherein reserving the part of the radio resources or all of the radio resources comprises:
using a security context before a network handover.

**21.** The method of claim 1, wherein reserving the part of the radio resources or all of the radio resources comprises:
reserving a dedicated control channel (DCCH).

**22.** The method of claim 21, wherein reserving the DCCH comprises:
continuing to send and receive data according to the DCCH.

**23.** The method of claim 1, wherein reserving the part of the radio resources or all of the radio resources comprises:
reserving part of QoS flows or QoS flow information, or reserving all of QoS flows or QoS flow information.

**24.** The method of claim 23, wherein reserving the QoS flows or the QoS flow information comprises:
continuing to use the QoS flow or the QoS flow information to perform at least one of data sending of a user plane or data receiving of a user plane.

**25.** A network handover method, applied to a second communication node, comprising:
sending a first message to a first communication node, wherein the first message carries radio resource indication information, and the radio resource indication information is used for indicating reserving part of radio resources of a source cell or all of the radio resources of the source cell after a network handover.

**26.** The method of claim 25, wherein the second communication node is a network node at a source side.

**27.** A network handover apparatus, configured at a first communication node, comprising:

a receiving module, which is configured to receive a first message, wherein the first message carries radio resource indication information; and
a reservation module, which is configured to reserve part of radio resources of a source cell or all of the radio resources of the source cell according to the radio resource indication information.

**28.** A network handover apparatus, configured at a second communication node, comprising:
a sending module, which is configured to send a first message to a first communication node, wherein the first message carries radio resource indication information, and the radio resource indication information is used for indicating reserving part of radio resources of a source cell or all of the radio resources of the source cell after a network handover.

**29.** A device, comprising:

at least one processor;
a memory, which is configured to store at least one program;

wherein the at least one program, when executed by the at least one processor, causes the at least one processor to implement the method of any one of claims 1 to 26.

**30.** A storage medium, storing a computer program, wherein the computer program, when executed by a processor, implements the method of any one of claims 1 to 26.

**FIG. 1**

**FIG. 2**

Receive a first message, where the first message carries radio resource indication information ⟋ S11

Reserve part or all of radio resources of a source cell according to the radio resource indication information ⟋ S12

**FIG. 3**

Send a first message to a first communication node, where the first message carries radio resource indication information, and the radio resource indication information is used for indicating reserving part or all of radio resources of a source cell after a network handover ⟋ S21

**FIG. 3A**

| UE | gNB | eNB |
|----|-----|-----|

S401. Initiate an IMS voice call service

S402.MobilityFromNRCommand (secondary cell or cell group information)

S403. Initiate a handover to the E-UTRA

S404.Perform a data transmission through the reserved part of radio connections or radio configurations or the reserved part or all of PDU SESSIONs

**FIG. 4**

EP 4 145 904 A1

```
UE                          gNB                          eNB
 |                           |                            |
 | S501. Initiate an IMS voice call service               |
 |-------------------------->|                            |
 |                           |                            |
 | S502. MobilityFromNRCommand (indication information    |
 |           about reserving a source NR cell)            |
 |<--------------------------|                            |
 |                           |                            |
 | S503. Initiate a handover to the E-UTRA                |
 |------------------------------------------------------->|
 |                           |                            |
 | S504. Perform a data transmission through the reserved part or
 | all of radio connections or radio configurations or the reserved
 |       part or all of PDU SESSIONs                      |
 |<------------------------------------------------------|
 |                           |                            |
```

**FIG. 5**

```
UE                          gNB                          eNB
 |                           |                            |
 | S601. Send a measurement report                        |
 |-------------------------->|                            |
 |                           |                            |
 | S602. MobilityFromNRCommand (M-                        |
 |   eNB, indication information about                    |
 |      reserving a source NR cell)                       |
 |<--------------------------|                            |
 |                           |                            |
 | S603. Initiate a handover to the E-UTRA                |
 |------------------------------------------------------->|
 |                           |                            |
 | S604. Schedule the UE to perform a signaling control or data
 | transmission through the reserved part of SRBs or DRBs or
 |    PDU SESSIONs according to a network demand          |
 |<------------------------------------------------------|
 |                           |                            |
```

**FIG. 6**

UE — gNB — eNB

S701. Send a measurement report

S702. MobilityFromNRCommand (M-eNB, indication information about reserving a source NR cell)

S703. Initiate a handover to the E-UTRA

S704. Schedule the UE to perform a signaling control or data transmission through the reserved part of SRBs or DRBs or PDU SESSIONs according to a network demand

**FIG. 7**

UE — gNB — eNB

S801. MobilityFromNRCommand (M-eNB, indication information about reserving a source NR cell)

S802. RRC RECONFIGURATION

S803. Perform a signaling control or data transmission through the reserved part of SRBs or DRBs or PDU SESSIONs

**FIG. 8**

```
┌────────┐              ┌────────┐              ┌────────┐
│   UE   │              │  gNB   │              │  eNB   │
└────────┘              └────────┘              └────────┘
     │                       │                       │
     │  S901. RRCConnectionReconfiguration (a master cell or
     │  cell group and 0 to multiple secondary cells or cell
     │                    groups)                    │
     │◄──────────────────────────────────────────────│
     │                       │                       │
     │  S902. RRCConnectionReconfigurationComplete    │
     │───────────────────────────────────────────────►
     │                       │                       │
```

**FIG. 9**

```
┌────────┐              ┌────────┐              ┌────────┐
│   UE   │              │  gNB   │              │  eNB   │
└────────┘              └────────┘              └────────┘
     │                       │                       │
     │          S1001.       │                       │
     │  MobilityFromNRCommand (an                     │
     │   indication about reserving a                 │
     │         source cell)  │                       │
     │◄──────────────────────│                       │
     │                       │                       │
     │  S1002. RRCConnectionReconfigurationComplete   │
     │───────────────────────────────────────────────►
     │                       │                       │
     │  S1003. Continue to communicate through the reserved
     │                  PDU SESSION                   │
     │◄───────────────────────────────────────────────
     │                       │                       │
```

**FIG. 10**

UE | gNB | eNB

S1101. RRCConnectionReconfiguration (secondary cell or cell group reservation indication information)

S1102. RRCConnectionReconfigurationComplete

S1103. Communicate with the UE via the T-MN and the reserved part or all of radio configurations or radio connections of the source secondary cell or cell group

**FIG. 11**

UE | gNB | eNB

S1201. MobilityFromNRCommand (secondary cell or cell group reservation indication information)

S1202. RRCConnectionReconfigurationComplete

S1203. Continue to communicate through the reserved PDU SESSION

**FIG. 12**

131

132

Receiving
module

Reservation
module

**FIG. 13**

1301

Sending module

**FIG. 13A**

**FIG. 14**

## INTERNATIONAL SEARCH REPORT

| International application No. |
|---|
| **PCT/CN2021/087360** |

**A. CLASSIFICATION OF SUBJECT MATTER**

H04W 36/00(2009.01)i

According to International Patent Classification (IPC) or to both national classification and IPC

**B. FIELDS SEARCHED**

Minimum documentation searched (classification system followed by classification symbols)

H04W，H04L，H04Q

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, 3GPP: 网络, 切换, 源基站, 源小区, 原小区, 保留, 保持, 连接, 资源, network, switch+, original cell, source cell, base station, reserv+, connect+, resource

**C. DOCUMENTS CONSIDERED TO BE RELEVANT**

| Category* | Citation of document, with indication, where appropriate, of the relevant passages | Relevant to claim No. |
|---|---|---|
| PX | CN 112512086 A (ZTE CORPORATION) 16 March 2021 (2021-03-16)<br>claims 1-30 | 1-30 |
| X | CN 107371205 A (ZTE CORPORATION) 21 November 2017 (2017-11-21)<br>description, paragraphs [0033]-[0210] and figures 1-8 | 1, 2, 9, 10,<br>14, 17, 19-30 |
| A | CN 105027619 A (NOKIA TECHNOLOGY CO., LTD.) 04 November 2015 (2015-11-04)<br>entire document | 1-30 |
| A | US 2018324645 A1 (OFINNO TECHNOLOGIES, LLC.) 08 November 2018 (2018-11-08)<br>entire document | 1-30 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 June 2021** | **01 July 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/087360**

| Patent document cited in search report | | | Publication date (day/month/year) | Patent family member(s) | | | Publication date (day/month/year) |
|---|---|---|---|---|---|---|---|
| CN | 112512086 | A | 16 March 2021 | None | | | |
| CN | 107371205 | A | 21 November 2017 | WO | 2017193940 | A1 | 16 November 2017 |
| CN | 105027619 | A | 04 November 2015 | EP | 2912887 | A1 | 02 September 2015 |
| | | | | US | 2015282033 | A1 | 01 October 2015 |
| | | | | WO | 2014065828 | A1 | 01 May 2014 |
| US | 2018324645 | A1 | 08 November 2018 | None | | | |

Form PCT/ISA/210 (patent family annex) (January 2015)